# EUROPEAN PATENT SPECIFICATION

(11) **EP 2 484 557 B1**
(45) Date of publication and mention of the grant of the patent: **17.07.2019**
(21) Application number: 12153194.1
(22) Date of filing: 31.01.2012
(51) Int. Cl.: B60Q 1/14, B60Q 1/12

(54) **Light distribution controlling apparatus of vehicle headlamp**
Lichtverteilungssteuerungsvorrichtung eines Fahrzeugscheinwerfers
Appareil de contrôle de la distribution de lumière d'un phare de véhicule

(30) Priority: 04.02.2011 JP 2011022244
(43) Date of publication of application: 08.08.2012
(73) Proprietor: Koito Manufacturing Co., Ltd., Tokyo 108-8711 (JP)
(72) Inventor: Nakanishi, Yutaka, Shimizu-shi, Shizuoka (JP); Yamazaki, Masashi, Shimizu-shi, Shizuoka (JP)
(74) Representative: Grünecker Patent- und Rechtsanwälte PartG mbB

(56) References cited:
- EP-A1- 2 230 128
- EP-A1- 2 266 837
- EP-A1- 2 266 838
- EP-A2- 2 279 908
- EP-A2- 2 394 852
- JP-A- 2009 227 088

## Description

### BACKGROUND OF THE INVENTION

### <FIELD OF THE INVENTION>

The present invention relates to a light distribution controlling apparatus controlling light distribution of a headlamp of a vehicle such as an automobile, and more particularly, to a light distribution controlling apparatus that can improve visibility of a front area of an own vehicle while preventing glare to a preceding vehicle or an oncoming vehicle that exists in front of the own vehicle.

### <RELATED ART>

In these light distribution controlling apparatuses, there is a type where an adaptive driving beam (ADB) control is adapted. According to the ADB control, when a front vehicle (such as the preceding vehicle or the oncoming vehicle) is detected, a light distribution is controlled in order to shield an area corresponding to the detected front vehicle. As a result, a visibility of a front area can be improved by brightly lighting a possible wide area of the front area of the own vehicle where the front vehicle does not exist while preventing a glare to the front vehicle. For example, according to a system described in Patent Document 1, when the vehicle that exists in front of the own vehicle is detected, a light distribution pattern is formed by adding an additional light distribution pattern onto an area above a cut-off line of a low beam light distribution pattern and the light distribution pattern with the additional light distribution pattern is swivel-controlled to correspond to a position of the front vehicle, so that a visibility of the front area in the own vehicle can be improved without dazzling the front vehicle.

Patent Document 1: JP-A-2010-000957

In the above ADB control, although any problems do not particularly occur when the own vehicle travels a straight road, an uncomfortable feeling may be caused to the driver of the own vehicle by the light distribution control when the vehicle travels a curved road. For example, when the own vehicle travels a right-curved road and passes with the oncoming vehicle, since the detected position of the oncoming vehicle is relatively changed slowly from a right side to a left direction of the front area when viewed from the own vehicle, the ADB control swivels the light distribution to the left direction so as to follow the relative positional change of the oncoming vehicle. Therefore, even though the own vehicle travels while turning right, the headlamp is swiveled to the left direction and a mismatch between the traveling direction and a change in an irradiation direction deteriorates the visibility of the front area of the own vehicle while causing the discomfort for the driver of the own vehicle.

In order to solve the above problem, it is considered to apply an Adaptive front-lighting system (AFS) control in which an irradiation direction of the headlamp is swiveled horizontally so as to follow a change in a steering direction of the own vehicle. If the AFS is applied to the headlamp adopting the ADB, the irradiation direction of the headlamp is swivel-controlled in the traveling direction of the own vehicle by the AFS control so that the discomfort by the ADB control can be alleviated. However, when the AFS control is applied to the ADB control, both swivel angles of the ADB control and the AFS control may conflict to each other, and as a result, it may be difficult to allow the swivel controls to cooperate with each other. Therefore, one control or both controls of the ADB control and the AFS control are complicated and lighting by inappropriate light distribution is made when both swivel controls are not in cooperation with each other. As a result, it may be difficult to implement an appropriate light distribution controlling apparatus with high visibility.

The document EP 2 266 8368 A1 discloses a vehicle headlamp apparatus comprising a adaptive front-lighting system (AFS) and changing light distribution from high beam to partial high beam or low beam upon detection of a forward vehicle. The light distribution is switched from partial high beam to low beam when the headlamp has reached the end of the movable range and can therefore not be swivelled further away from the straight direction.

### SUMMARY OF THE INVENTION

The invention is defined in the appended claims. One or more embodiments of the invention relate to a light distribution controlling apparatus that improves visibility of a front area for a driver by allowing AFS control and ADB control to be in cooperation with each other in a vehicle headlamp with the AFS control and the ADB control. In addition, the embodiments relate to a light distribution controlling apparatus capable of alleviating discomfort for the driver in the ADB control.

### BRIEF DESCRIPTION OF THE DRAWINGS

FIG. 1 is a conceptual configuration diagram of a light distribution controlling apparatus according to an exemplary embodiment.
FIG. 2 is a schematic configuration diagram of a headlamp according to the exemplary embodiment.
FIG. 3 is a diagram showing setting patterns of a light distribution pattern by left and right headlamps.
FIG. 4A and FIG. 4B are diagrams describing detection and offsetting of a vehicle position.
FIG. 5 is a flowchart of light distribution control in the exemplary embodiment.
FIGS. 6A1, 6A2, 6B1, 6B2, 6C1 and 6C2 are diagrams describing light distribution patterns when ADB control is executed.
FIGS. 7A1, 7A2, 7B1 and 7B2 are diagrams describing light distribution patterns when ADB control and AFS control are executed.
FIG. 8 is a diagram describing about offsetting a base position, in a similar situation of FIG. 7B1.

### DETAILED DESCRIPTION OF THE EMBODIMENTS

Subsequently, embodiments of the present invention will be described with reference to the accompanying drawings. Further, the embodiments and modifications thereof described herein are not intended to limit the invention but only to exemplify the invention, and all features or combinations of the features of the embodiments and/or the modifications are not always essential to the invention.

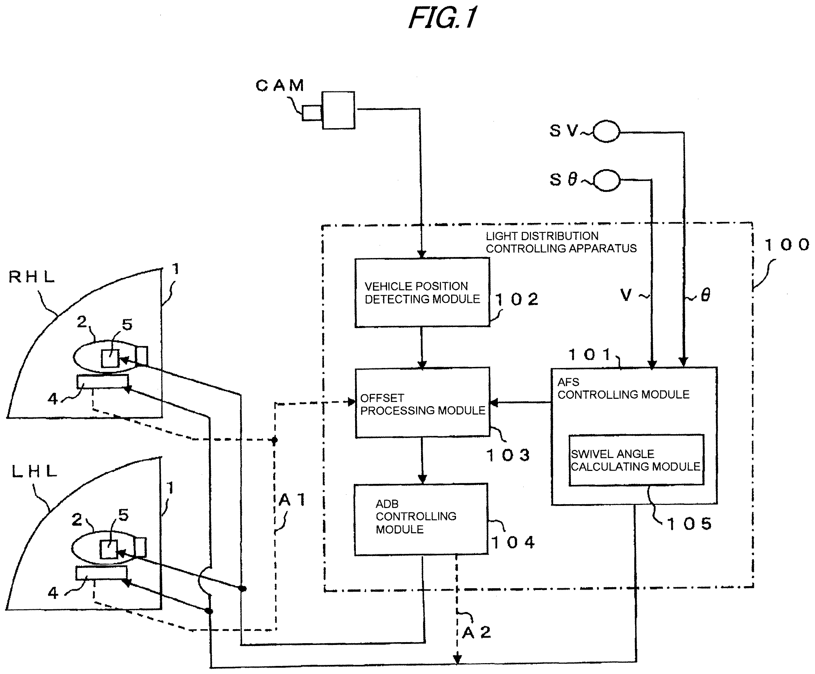

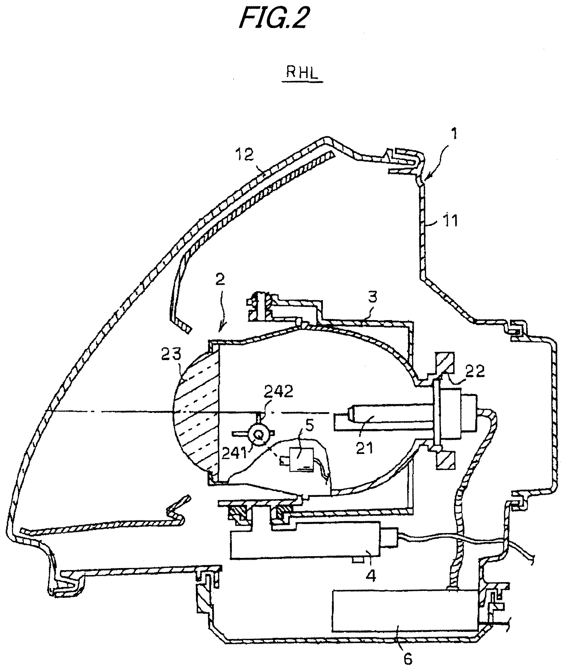

FIG. 1 is a conceptual configuration diagram of a light distribution controlling apparatus applied to a headlamp of a vehicle according to an exemplary embodiment of the present invention. A left headlamp LHL and a right headlamp RHL are mounted on left and right portions of the front side of the vehicle, respectively and light distribution of the headlamps is configured to be controlled by the light distribution controlling apparatus 100. The left and right headlamps (LHL and RHL) basically have the same configuration with each other, and for example, as the right headlamp RHL in FIG. 2, a projector type lamp unit 2 is incorporated in a lamp housing 1 constituted by a lamp body 11 and a front cover 12 that is transparent. The lamp unit 2 is not described in detail herein, but includes a light source 21 constituted by a discharge bulb, a reflector 22 having a spheroidal shape, a projection lens 23 placed at a front position of the reflector 22, and a variable shade 24 that forms a pattern of light projected from the projection lens 23. The lamp unit 2 is configured to be supported on a bracket 3 placed in the lamp housing 1 and swivel-controlled horizontally, that is, to swing a light irradiation direction horizontally by a swivel actuator 4. The variable shade 24 includes a plurality of light shielding plates 242 having different shapes on the circumferential surface of a cylindrical main shaft 241. A rotational position of the variable shade 24 is variable in a shaft circumferential direction by a shade actuator 5. The light shielding plate 242 positioned on a lamp optical axis is changed by changing the rotational position to thereby change a light distribution pattern of light projected from the lamp unit 2. The discharge bulb 21 is turned ON in electrical connection with a discharge circuit unit 6.

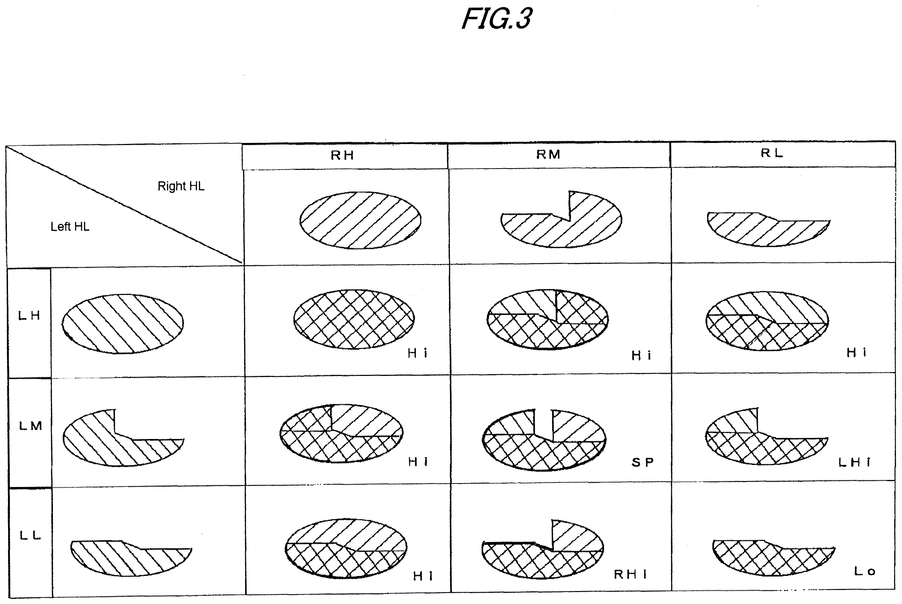

FIG. 3 is a diagram showing light distribution patterns of the left and right headlamps (LHL and RHL) controlled by the variable shade 24 and an overall light distribution pattern of the headlamps in which the light distribution patterns of the left and right headlamps (LHL and RHL) are overlapped with each other. In the right headlamp RHL of a horizontal frame in FIG. 3, high beam light distribution RH without a cut-off line is formed at a first rotational position of the variable shade 24 and low beam light distribution RL with the cut-off line is formed at a third rotational position of the variable shade 24. At a second rotational position of the variable shade 24, right high beam light distribution in which the high beam light distribution is formed in a right area and the low beam light distribution in a left area, herein, light distribution RM called right high light distribution is formed. Similarly, in a left headlamp LHL of a vertical frame in FIG. 3, high beam light distribution LH, low beam light distribution LL, and left high light distribution LM are formed based on the rotational positions of the variable shade 24. As a result, by overlapping the light distribution of the left and right headlamps (LHL and RHL) throughout the headlamp, lighting is made by high beam light distribution Hi, low beam light distribution Lo, right high light distribution RHi, left high light distribution LHi, and split light distribution SP with a concave center by overlapping the right high light distribution and the left high light distribution with each other, as shown in FIG. 3. Meanwhile, high beam light distributions with different light intensity distributions can be acquired by overlapping lights of the left and right headlamps with respect to the high beam light distribution Hi.

Referring back to FIG. 1, the light distribution controlling apparatus 100 includes an AFS controlling module 101 that horizontally swivel-controlls the irradiation directions of the left and right headlamps (LHL and RHL) of the own vehicle, a vehicle position detecting module 102 that detects the position of a vehicle which exists in the front area of the own vehicle, an offset processing module 103 that offset-processes the detected vehicle position based on an AFS swivel angle which is calculated by the AFS controlling module 101, and an ADB controlling module 104 that determines the light distribution patterns of the left and right headlamps (LHL and RHL) of the own vehicle based on the offset-processed vehicle position.

A vehicle velocity sensor SV to detect a vehicle velocity of the own vehicle and a steering angle sensor Sθ to detect a steering angle in link with a steering wheel of the own vehicle are connected to the AFS controlling module 101. The vehicle velocity V and the steering angle θ detected by each sensor are used as control inputs. The AFS controlling module 101 includes an AFS swivel angle calculating module 105 that calculates an AFS swivel angle for lighting a traveling destination direction of the own vehicle after a predetermined time from a current point of time, for example, after several seconds by performing a predetermined calculation based on the vehicle velocity V and the steering angle θ. The swivel angle calculating module 105 controls the swivel actuators 4 installed in the left and right headlamps (LHL and RHL) based on the calculated AFS swivel angle and separately swivel-controls the lamp units 2 of the left and right headlamps (LHL and RHL) horizontally to execute the AFS control. Meanwhile, the AFS swivel angle calculating module 105 may be configured to calculate the AFS swivel angle based on the information on the road which the own vehicle travels and in this case, the AFS controlling module 101 may be configured to use road information from a navigation device mounted on the own vehicle or road information acquired from a road traffic communication system.

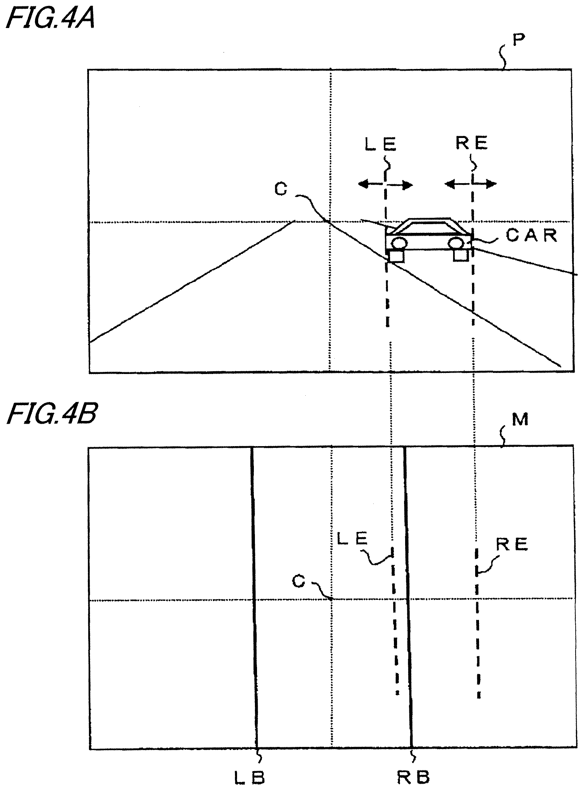

A photographing camera CAM to photograph the front area of the own vehicle is connected to the vehicle position detecting module 102 and the vehicle position detecting module 102 image-analyzes the photographed image by using the photographing camera CAM to detect the position of the front vehicle which exists in front of the own vehicle, that is, the oncoming vehicle or the preceding vehicle. The vehicle position detecting module 102 detects a front vehicle CAR which exits in the photographed image P as shown in FIG. 4A and detects both left and right ends of the vehicle, that is, detects that a right end position RE and a left end position LE are at which side of the left and right directions, respectively when viewed from the own vehicle are positioned with respect to a straight direction of the own vehicle, as the vehicle position of the detected front vehicle CAR.

The offset processing module 103 offsets the detected vehicle position, that is, the right end position RE and the left end position LE horizontally based on the AFS swivel angle from the AFS controlling module 101. In the offset processing, both the right end position RE and the left end position LE are offset at the same angle as the AFS swivel angle of each of the right headlamp RHL and the left headlamp LHL with respect to the right end position RE and the left end position LE detected, as shown in FIG. 4A, respectively, however, in an opposite direction to a swivel direction. That is, the offset processing of shifting the right end position RE and the left end position LE of FIG. 4A as in the arrows of FIG. 4A is performed and the offset vehicle position is outputted to the ADB controlling module 104.

The ADB controlling module 104 determines the light distribution pattern based on the offset vehicle position. The ADB controlling module 104 includes a light distribution control map in order to determine the light distribution pattern and the offset vehicle position is applied to the light distribution control map to select any one of the predetermined light distribution patterns RH, RL, and RM or LH, LL, and LM shown in FIG. 3 with respect to each of the left and right headlamps. The light distributions of the headlamps (LHL and RHL) is switched by driving and controlling the variable shade 24 of each of the left and right headlamps (LHL and RHL) based on the selected light distribution pattern, and as a result, the light distribution throughout the headlamp is controlled by any one of the high beam light distribution Hi, the low beam light distribution Lo, the right high light distribution RHi, the left high light distribution LHi, and the split light distribution SP.

That is, the ADB controlling module 104 has a light distribution control map M schematically shown in FIG. 4B. The light distribution control map M sets an area corresponding to the image P of the front area of the own vehicle photographed by the photographing camera CAM as an overall map area, and makes the center C of the overall map area be consistent with a straight direction of the own vehicle to set left and right end positions of a predetermined area including the center horizontally as a right base position RB and a left base position LB, respectively. The right end position RE and the left end position LE of the detected vehicle CAR are compared with the right base position RB and the left base end position LB, respectively to determine the light distribution pattern of each of the headlamps (LHL and RHL) from the comparison result. For example, with respect to the right headlamp RHL, when the right end position RE of the detected vehicle position is positioned at a further right side than the right base position RB, the detected vehicle is recognized as an approaching oncoming vehicle to be set as the low beam light distribution RL and when the right end position RE is positioned at a further left side than the right base position RB, the detected vehicle is recognized as a distant oncoming vehicle to be set as the right high light distribution RM. Similarly, with respect to the left headlamp LHL, when the left end position LE of the detected vehicle position is positioned at a further left side than the left base position LB, the detected vehicle is recognized as an approaching preceding vehicle to be set as the low beam light distribution LL and when the left end position LE is positioned at a further right side than the left base position LB, the detected vehicle is recognized as the distant preceding vehicle to be set as the left high light distribution LM. Meanwhile, when the front vehicle is never detected, the left and right headlamps (LHL and RHL) may be set as the high beam light distributions RH and LH, respectively.

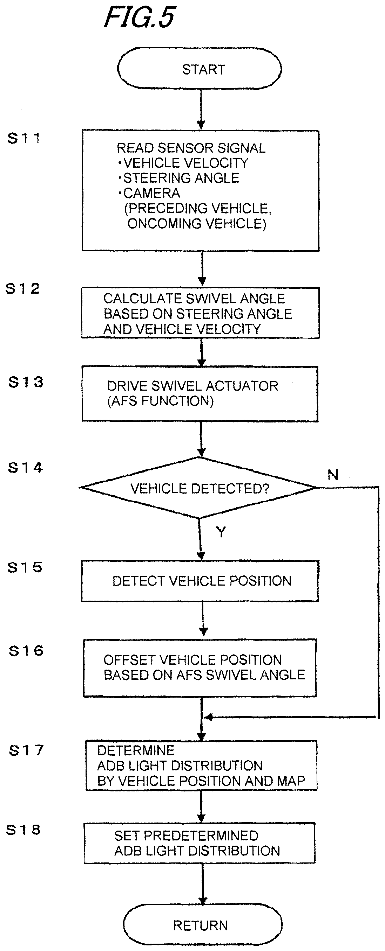

Subsequently, an operation of the light distribution controlling apparatus 100 according to the embodiment configured as above will be described. FIG. 5 is a flowchart describing the flow of light distribution control. As the own vehicle travels, the vehicle velocity sensor SV detects the vehicle velocity V of the own vehicle and the steering angle sensor Sθ detects the steering angle θ of the own vehicle based on steering the steering wheel. Simultaneously, the photographing camera CAM photographs the front area of the own vehicle to output a photographed image signal (step S11). The AFS controlling module 101 calculates the AFS swivel angle based on the detected vehicle velocity V and the detected steering angle θ of the own vehicle (step S12). The AFS swivel angle is, for example, a swivel angle at which any one of left and right headlamps or both headlamps (LHL and RHL) irradiate a traveling destination by calculating the position of the traveling destination of the own vehicle by later a predetermined time, for example, later several seconds, than a current time based on the vehicle velocity and the steering angle when the vehicle travels a curved road. The AFS controlling module 101 controls the swivel actuator 4 of any one of the left and right headlamps or both headlamps (LHL and RHL) based on the calculated AFS swivel angle to horizontally deviatorily control an irradiation direction of the headlamp, that is, an irradiation optical axis of the lamp unit 2 (step S13).

Subsequently, the vehicle position detecting module 102 image-analyzes the image signal of the front area of the own vehicle photographed by the photographing camera CAM to detect the front vehicle that exists in front of the own vehicle, that is, the oncoming vehicle or the preceding vehicle (step S14). When the vehicle position detecting module 102 detects the front vehicle, the vehicle position detecting module 102 detects the position of the front vehicle (step S15). The position of the vehicle includes the position of both width-direction ends of the detected vehicle CAR, that is, the right end position RE and the left end position LE of the detected vehicle when viewed from the own vehicle, as described in FIG. 4A. The offset processing module 103 offsets the detected vehicle position based on the AFS swivel angle calculated by the AFS controlling module 101 (step S16). In the offset processing, the right end position RE of the detected vehicle is offset in an opposite direction at the AFS swivel angle of the right headlamp RHL and the left end position LE of the detected vehicle is offset in an opposite direction at the AFS swivel angle of the left headlamp LHL. Thereafter, the ADB controlling module 104 executes the ADB control based on the offset vehicle position to determine the light distribution patterns of the left and right headlamps (LHL and RHL). The ADB controlling module 104 drive-controls the variable shades 24 of the left and right headlamps based on the determined light distribution patterns to control the light distribution of light irradiated from each headlamp as shown in FIG. 3 (step S18). Meanwhile, in step S14, when the front vehicle is not detected, the vehicle position is set to a default value. In this case, the ADB controlling module 104 sets each of the headlamps (LHL and RHL) as the high beam light distribution.

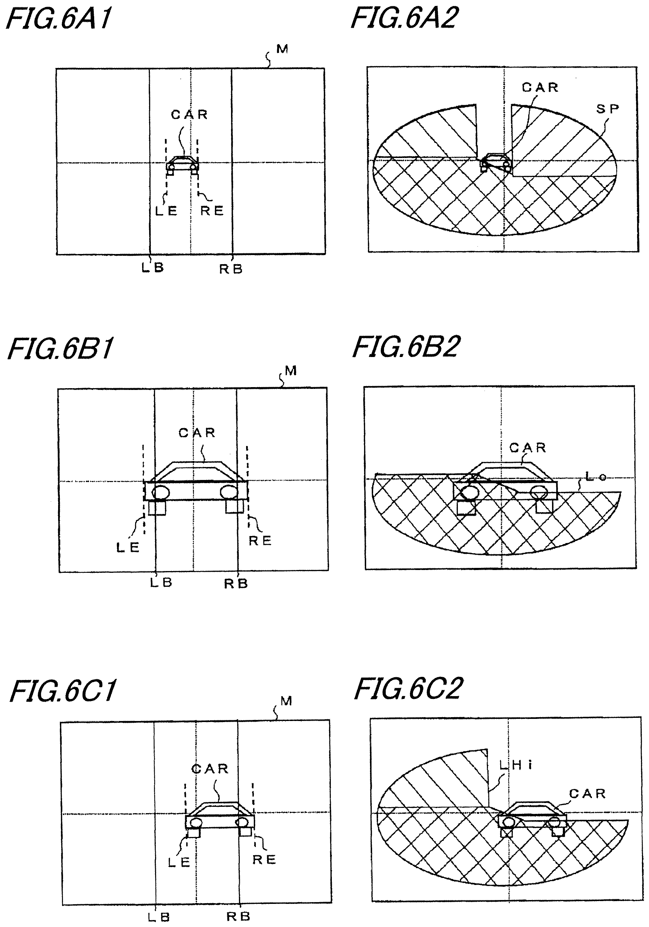

As described above, the light distribution controlling apparatus 100 according to the embodiment of the present invention determines the light distribution patterns of the left and right headlamps (LHL and RHL) based on the detected vehicle position in the ADB controlling module 104. For example, as shown in FIG. 6A1, when the preceding vehicle CAR that exists in far front of the vehicle is detected, the right end position RE of the preceding vehicle CAR is positioned at the left side of a right base position RB, and as a result, the right headlamp RHL is set as right high light distribution RM, and the left end position LE is positioned at the right side of a left base position LB, and as a result, the left headlamp LHL is set as left high light distribution LM. Therefore, the light distributions of the left and right headlamps overlap with each other to be a light distribution pattern by the split light distribution SP, as shown in FIG. 6A2, to achieve light distribution that widely lights both areas of the preceding vehicle without dazzling the preceding vehicle CAR, thereby improving the visibility of the front area of the own vehicle.

As shown in FIG. 6B1, when the preceding vehicle CAR exists in short front of the own vehicle, the right end position RE of the preceding vehicle CAR is positioned at the right side of the right base position RB, and as a result, the right headlamp RHL is set as low beam light distribution RL, and the left end position LE is positioned at the left side of the left base position LB, and as a result, the left headlamp LHL is set as low beam light distribution LL. Therefore, the light distributions of the left and right headlamps overlap with each other to be a light distribution pattern by low beam light distribution Lo, as shown in FIG. 6B2, to achieve light distribution that secures the visibility of the previous area of the own vehicle without dazzling the preceding vehicle CAR.

Alternatively, as shown in FIG. 6C1, when the oncoming vehicle CAR approaching the front side of the vehicle is detected, the right end position RE of the oncoming vehicle CAR is positioned at the right side of the right base position RB, and as a result, the right headlamp RHL is set as low beam light distribution RL and the left end position LE is positioned at the right side of the left base position LB, and as a result, the left headlamp LHL is set as left high light distribution LM. Therefore, the light distributions of the left and right headlamps overlap with each other, such that, as shown in FIG. 6C2, the right area has a light distribution pattern by left high light distribution LHi in the low beam light distribution and the left area has the light distribution pattern by the left high light distribution LHi in the high beam light distribution to achieve light distribution that widely lights a front area at an own vehicle lane side without dazzling the oncoming vehicle CAR.

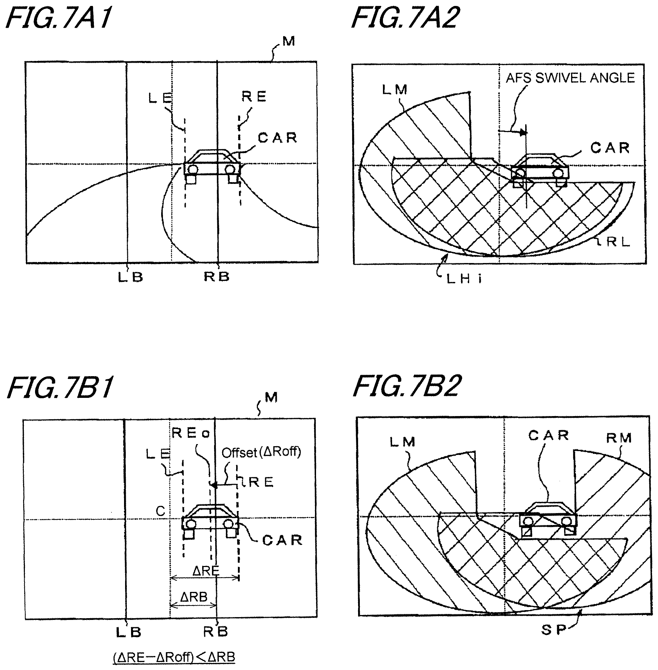

As described above, basic light distribution control in the present invention has been described when the own vehicle travels the straight road or the curved road. Hereinafter, a case where AFS control is performed according to a method known from the prior art when the own vehicle travels the curved road will be described. As shown in FIG. 7A1, by detecting the oncoming vehicle approaching the own vehicle when the own vehicle travels a right curved road, when it is assumed that the right end position RE of the oncoming vehicle CAR is positioned at the right side of the right base position RB and the left end position LE is positioned at the right side of the left base position LB, the ADB controlling module 104 sets the right headlamp RHL as the low beam light distribution RL and the left headlamp LHL as the left high light distribution LH as shown in FIG. 7A2. In this case, when the AFS control is achieved in the AFS controlling module 101, the left headlamp LHL is not swivel-controlled but is irradiated in a straight direction and the right headlamp RHL is swivel-controlled to the right side to light an area over the right direction from the straight direction of the own vehicle. As described above, since the right headlamp RHL is controlled as the low beam light distribution RL by the ADB control while the right headlamp RHL is AFS swivel-controlled to the right side, the right area of the oncoming vehicle CAR is set as light distribution that lights only the previous area of the own vehicle, and as a result, the far front area cannot be lighted, thereby deteriorating the visibility of the right area.

In order to prevent such a deterioration, the light distribution control apparatus according to the invention comprises an offset processing module. The offset processing module offsets the detected right end position RE of the oncoming vehicle CAR to correspond to the AFS swivel angle in the right headlamp RHL in an opposite direction at the same AFS swivel angle. As shown in FIG. 7B1, in a light distribution control map M, the right end position RE is offset at the same angle as the AFS swivel angle in the left direction. For example, when the AFS swivel angle of the right headlamp RHL is 5°, the offset processing module 103 offsets the detected right end position RE to the left side by 5° in the light distribution control map M. The offset right end position REo is positioned at the left side of the right base position RB, and as a result, the ADB controlling module 104 sets the right headlamp RHL as the right high light distribution RM. As a result, as shown in FIG. 7B2, the left high light distribution LM of the left headlamp LHL and the right high light distribution RM of the right headlamp RHL overlap with each other to be the light distribution pattern by the split light distribution SP. In the split light distribution SP, since the right headlamp RHL is swivel-controlled to the right side, the width of a central light shielding area is expanded horizontally to light the right area up to a far front area without dazzling the oncoming vehicle CAR, thereby improving the visibility of the right area.

As described above, even though the headlamp is set as light distribution that does not cause glare to the oncoming vehicle by the ADB controller 104 when the headlamp is AFS-swiveled by the AFS control, the vehicle position is offset-compensated by considering the swivel of the light distribution by the AFS control to acquire light distribution that alleviates an influence by the AFS control. As a result, the AFS-controlled light distribution is not limited beyond necessity, such that the headlamp can be controlled by the light distribution to improve the visibility of the front area of the own vehicle.

Herein, in the case of FIG. 7B1, when the right end position RE is not positioned at the left side of the right base position RB even though the right end position RE is offset, if the right headlamp RHL is set as the right high light distribution RM, the right headlamp RHL may cause glare to the oncoming vehicle CAR, and as a result, the light distribution of the right headlamp RHL needs to be maintained as the low beam light distribution as it is.

In FIG. 7B2, the control of the light distribution of the oncoming vehicle when the own vehicle travels the right curved road has been described, but the detected left end position of the oncoming vehicle is offset in the right direction in the same manner even in the case where the left headlamp is AFS-swiveled to the left direction when the own vehicle travels the left curved road. Therefore, even when the ADB control is performed, the light distribution of the left headlamp can be prevented from being limited beyond necessity, thereby improving the visibility of the left area of the own vehicle. The detected right end position or the left end position of the preceding vehicle is offset in the same manner as above even in the case where the preceding vehicle is detected when the own vehicle travels the right curved or left curved road. Therefore, even though the light distribution that does not cause glare to the preceding vehicle is set by the ADB control, front lighting of the own vehicle is limited beyond necessity to prevent the visibility from being deteriorated.

In the embodiment, the vehicle position is offset in the offset processing module 103 based on the AFS swivel angle calculated in the AFS controlling module 101, but actually, the vehicle position may be offset based on the swivel angle of the headlamp which is AFS swivel-controlled. In this case, an angle sensor detecting the presently controlled swivel angle is installed in the swivel actuator 4 to feed back the swivel angle detected by the angle sensor to the offset processing module 103 as expressed by dashed line A1 of FIG. 1. Since the vehicle position is offset based on the swivel angle which is actually AFS swivel-controlled, offset processing precision can be improved and light distribution precision can be improved.

In the present invention, the ADB controlling module 104 ADB swivel-controls the determined light distribution patterns horizontally based on the detected vehicle position of the front vehicle, such that the light distribution pattern in one-side high light distribution or split light distribution can be moved as the front vehicle moves. For example, as expressed by dashed line A2 of FIG. 1, the ADB controlling module 104 is configured to drive-control the swivel actuators 4 of the left and right headlamps (LHL and RHL) and the ADB controlling module 104 calculates how the front vehicle shifts to the right side or the left side from the detected vehicle position with respect to the straight direction of the own vehicle and horizontally swivel-controls the ADB-controlled light distribution pattern based on the calculated shift amount to completely prevent the dazzling with respect to the preceding vehicle or the oncoming vehicle and improve the visibility of an area other than the front vehicle.

As described above, in the case of configuring the ADB controlling module 104 for enabling the ADB swivel that swivels the ADB controlled light distribution horizontally, when the oncoming vehicle is detected as the own vehicle travels the right curved road, the oncoming vehicle is detected as a vehicle that moves in the right direction toward the central area from the right end of the front area of the own vehicle. As a result, in the ADB controlling module 104, when the light distribution control of the oncoming vehicle is performed, the ADB swivel control is performed to swivel the light distribution pattern in the left direction as the oncoming vehicle moves. Therefore, even though the own vehicle travels in the right direction, the lighting of the own vehicle is swiveled in the left direction to cause a driver of the own vehicle to feel discomfort. However, in the present embodiment, the AFS swivel is performed in the right direction by the AFS control in the AFS controlling module 101 and the vehicle position is offset in an opposite direction to the AFS swivel to secure the light distribution in the AFS swiveled right area, thereby improving the visibility. Therefore, the driver cannot sense that a lighting area is moved to the left direction with the ADB swivel control to suppress the discomfort to the driver.

Further, according to the above exemplary embodiment, when the right and left headlamps are swiveled by the AFS control, the vehicle position (RE, LE) is offset based on the AFS swivel angle in the opposite direction of the swiveling, the vehicle position (REo, LEo) after the offset and the right and left base positions (RB, LB) are compared, and the ADB control is executed based on the comparison. However, it is apparent that the same advantage as the above exemplary embodiment can be achieved, by offsetting the right and left base positions (RB, LB) based on the AFS swivel angle in the same direction of the swiveling, comparing the vehicle position (RE, LE) with the offset right and left base positions (RBo, LBo), and executing the ADB control based on the comparison.

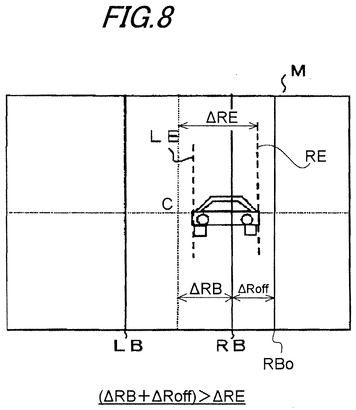

Fig. 8 shows an embodiment which does not fall under the scope of the claims but solves the problem underlying the invention in a mathematically equivalent manner. As shown in FIG. 8, the same control as the above exemplary embodiment can be executed by offsetting the right base position (RB) by an offset amount (ΔRoff) according to the AFS swivel angle, and comparing the offset right base position (RBo) and the right end position (RE) of the front vehicle (CAR). For example, as shown in FIG. 8, when a distance (ΔRB+ΔRoff) from the center (C) to the offset right base position (RBo) is larger than a distance (ΔRE) from the center (C) to the right end position (RE) (that is, ΔRB+ΔRoff>ΔRE), the right headlamp (RHL) is controlled to form the right high light distribution (RM) in the similar manner as FIG. 7B2. Further, the case (ΔRB+ΔRoff>ΔRE) in which "the distance (ΔRB+ΔRoff) from the center (C) to the offset right base position (RBo) is larger than the distance (ΔRE) from the center (C) to the right end position (RE)" as shown in FIG.8 is equivalent to the case (ΔRE-ΔRoff<ΔRB) "a distance (ΔRE-ΔRoff) from the center (c) to the offset right end position (REo) is smaller than a distance (ΔRB) from the center (c) to the right base position" as shown in FIG. 7B1.

As described in the above, in accordance with the above embodiments, a light distribution control of a vehicle headlamp may be carried out by the steps of:calculating an AFS swivel angle for lighting a traveling destination direction of an own vehicle after a predetermined time from a current point of time;
swivelling an optical axis of a right headlamp (RHL) and an optical axis of a left headlamp (LHL) according to the calculated AFS swivel angle;
detecting a vehicle position of a front vehicle (CAR) in front of the own vehicle by a camera (CAM);
setting a center (C) which is consistent with a straight direction of the own vehicle, a right base position (RB) at a predetermined distance (ΔRB) from the center (C) in a right direction, and a left base position (LB) at a predetermined distance (ΔLB) from the center (C) in a left direction, in a light distribution control map (M) corresponding to an image (P) of a front area of the own vehicle photographed by the camera (CAM);
determining a deviation amount (ΔRE) of a right end position (RE) of the detected front vehicle (CAR) from said center (C) and a deviation amount (ΔLE) of a left end position (LE) of the detected front vehicle (CAR) from said center (C), in the light distribution control map (M);
determining a right offset amount (ΔRoff) according to the AFS swivel angle of the right headlamp (RHL) and a left offset amount (ΔLoff) according to the AFS swivel angle of the left headlamp (LHL);
forming, by the right headlamp (RHL), a low beam light distribution (RL) in which cut-off lines are formed in both right area and left area of the optical axis of the right headlamp (RHL), in a case (ΔRE-ΔRoff>ΔRB, (the same as ΔRB+ΔRoff<ΔRE)) that a difference (ΔRE-ΔRoff) between the deviation amount (ΔRE) of the right end position (RE) of the detected front vehicle (CAR) from said center (C) and the right offset amount (ΔRoff) is larger than the distance (ΔRB) of the right base position (RB) from the center (C);
forming, by the right headlamp (RHL), a right high light distribution (RM) in which no cut-off line is formed in the right area of the optical axis of the right headlamp and the cut-off line is formed in the left area of the optical axis of the right headlamp, in a case (ΔRE-ΔRoff<ΔRB, (the same as ΔRB+ΔRoff>ΔRE)) that the difference (ΔRE-ΔRoff) between the deviation amount (ΔRE) of the right end position (RE) of the detected front vehicle (CAR) from said center (C) and the right offset amount (ΔRoff) is smaller than the distance (ΔRB) of the right base position (RB) from the center (C) (ΔRE-ΔRoff<ΔRB);
forming, by the left headlamp (LHL), a low beam light distribution (LL) in which cut-off lines are formed in both right area and left area of the optical axis of the left headlamp (LHL), in a case (ΔLE-ΔLoff>ΔLB, (the same as ΔLB+ΔLoff<ΔLE)) that a difference (ΔLE-ΔLoff) between the deviation amount (ΔLE) of the left end position (LE) of the detected front vehicle (CAR) from said center (C) and the left offset amount (ΔLoff) is larger than the distance (ΔLB) of the left base position (LB) from the center (C) (ΔLE-ΔLoff>ΔLB); and
forming, by the left headlamp (LHL), a left high light distribution (LM) in which no cut-off line is formed in the left area of the optical axis of the left headlamp and the cut-off line is formed in the right area of the optical axis of the left headlamp, in a case (ΔLE-ΔLoff<ΔLB, (the same as ΔLB+ΔLoff>ΔLE)) that the difference (ΔLE-ΔLoff) between the deviation amount (ΔLE) of the left end position (LE) of the detected front vehicle (CAR) from said center (C) and the left offset amount (ΔLoff) is smaller than the distance (ΔLB) of the left base position (RB) from the center (C) (ΔLE-ΔLoff<ΔLB).

Moreover, in accordance with the above embodiments, a light distribution controlling apparatus of a vehicle headlamp may include: an ADB controlling module 104 configured to detect a vehicle position of a front vehicle CAR in front of an own vehicle and to switch light distribution of the vehicle headlamp based on the detected vehicle position; an AFS controlling module 101 configured to swivel-control an irradiation direction of the vehicle headlamp following a change of a traveling direction of the own vehicle; and an offset module 103 configured to offset said vehicle position adopted in the ADB controlling module 104 depending on a swivel angle controlled by the AFS controlling module 101.

In the above structure, the offset module 103 may be configured to offset said vehicle position depending on a calculated swivel angle which is calculated by the AFS controlling module or the swiveled swivel angle of the headlamp which is swivel-controlled by the AFS controlling module.

In the above structure, the AFS controlling module 104 may be capable of separately swivel-controlling left and right headlamps of the own vehicle. The offset module 103 may be configured to offset a right end position of the detected front vehicle CAR depending on a swivel angle of the right headlamp and to offset a left end position of the detected front vehicle CAR depending on a swivel angle of the left headlamp. In addition, the offset module 103 may be configured to offset the right end position depending on a calculated swivel angle of the right headlamp which is calculated by the AFS controlling module or the swiveled swivel angle of the right headlamp which is swivel-controlled by the AFS controlling module, and to offset the left end position depending on a calculated swivel angle of the left headlamp which is calculated by the AFS controlling module or the swiveled swivel angle of the left headlamp which is swivel-controlled by the AFS controlling module.

According to the above structure, when the AFS-controlled headlamp is ADB-controlled, by offsetting a vehicle position of the detected vehicle as a reference during the ADB control in an amount corresponding to an swivel amount of the headlamp by the AFS control, the ADB-controlled light distribution can be compensated to the swivel amount by the AFS control, thereby the visibility of the headlamp is prevented from being deteriorated. In addition, by improving a visibility at a side to which the headlamp is swiveled by the offsetting process of the vehicle position, the discomfort with respect to the driver which is caused by swiveling the headlamp when the vehicle travels the curved road can be reduced.

The present invention can be adopted in an apparatus for controlling the light distribution of a vehicle headlamp that enables the AFS control and the ADB control.

## Claims

1. A light distribution controlling apparatus of a vehicle headlamp, comprising:
an adaptive driving beam (ADB) controlling module (104) configured to detect a vehicle position of a front vehicle (CAR) in front of an own vehicle and to switch light distribution of the vehicle headlamp based on the detected vehicle position and base positions (LB, RB); wherein the base positions (LB, RB) are defined in a light distribution control map (M) corresponding to an image (P) of a front area of the own vehicle, wherein the center (C) of the light distribution control map (M) is consistent with a straight direction of the own vehicle and wherein a right base position (RB) is set at a predetermined distance (ΔRB) from the center (C) in a right direction and a left base position (LB) is a at a predetermined distance (ΔRL) from the center (C) in a left direction;
an adaptive front-lighting system (AFS) controlling module (101) configured to swivel-control an irradiation direction of the vehicle headlamp depending on a change of a traveling direction of the own vehicle;
**characterized by**
an offset module (103) configured to offset, in the light distribution control map (M), the detected vehicle position adopted in the ADB controlling module (104) as an offset detected vehicle position (LEo, REo), depending on a calculated swivel angle calculated by the AFS controlling module (101), wherein, when the own vehicle travels a left-curved road,
the AFS controlling module (101) swivel-controls the left headlamp (LHL) of the own vehicle in a left direction,
the offset module (103) offsets a left end position (LE) of the detected vehicle position in a right direction as a left end position (LEo) of the offset detected vehicle position, depending on the calculated swivel angle, and
the ADB controlling module switches light distribution of the left headlamp (LHL) based on a comparison result between the left end position (LEo) of the offset detected vehicle position and a left base position (LB) of the base position,
wherein, when the own vehicle travels a right-curved road,
the AFS controlling module (101) swivel-controls the right headlamp (RHL) of the own vehicle in a right direction,
the offset module (103) offsets a right end position (RE) of the detected vehicle positon in a left direction as a right end position (REo) of the offset detected vehicle position, depending on the calculated swivel angle, and
the ADB controlling module switches light distribution of the right headlamp (RHL) based on a comparison result between the right end position (REo) of the offset detected vehicle position and a right base position (RB) of the base position.

2. A light distribution controlling method of a vehicle headlamp, the method comprising:
calculating an adaptive front-lighting system (AFS) swivel angle for lighting a traveling destination direction of an own vehicle after a predetermined time from a current point of time;
swivelling an optical axis of a right headlamp (RHL) and an optical axis of a left headlamp (LHL) according to the calculated AFS swivel angle;
detecting a vehicle position of a front vehicle (CAR) in front of the own vehicle by a camera (CAM);
setting a center (C) which is consistent with a straight direction of the own vehicle, a right base position (RB) at a predetermined distance (ΔRB) from the center (C) in a right direction, and a left base position (LB) at a predetermined distance (ΔLB) from the center (C) in a left direction, in a light distribution control map (M) corresponding to an image (P) of a front area of the own vehicle photographed by the camera (CAM);
determining a deviation amount (ΔRE) of a right end position (RE) of the detected front vehicle (CAR) from said center (C) and a deviation amount (ΔLE) of a left end position (LE) of the detected front vehicle (CAR) from said center (C), in the light distribution control map (M);
**characterized by**
determining a right offset amount (ΔRoff) according to the AFS swivel angle of the right headlamp (RHL) and a left offset amount (ΔLoff) according to the AFS swivel angle of the left headlamp (LHL);
forming, by the right headlamp (RHL), a low beam light distribution (RL) in which cut-off lines are formed in both right area and left area of the optical axis of the right headlamp (RHL), when a difference (ΔRE-ΔRoff) between the deviation amount (ΔRE) of the right end position (RE) of the detected front vehicle (CAR) from said center (C) and the right offset amount (ΔRoff) is larger than the distance (ΔRB) of the right base position (RB) from the center (C) (ΔRE-ΔRoff>ΔRB);
forming, by the right headlamp (RHL), a right high light distribution (RM) in which no cut-off line is formed in the right area of the optical axis of the right headlamp and the cut-off line is formed in the left area of the optical axis of the right headlamp, when the difference (ΔRE-ΔRoff) between the deviation amount (ΔRE) of the right end position (RE) of the detected front vehicle (CAR) from said center (C) and the right offset amount (ΔRoff) is smaller than the distance (ΔRB) of the right base position (RB) from the center (C) (ΔRE-ΔRoff<ΔRB);
forming, by the left headlamp (LHL), a low beam light distribution (LL) in which cut-off lines are formed in both right area and left area of the optical axis of the left headlamp (LHL), when a difference (ΔLE-ΔLoff) between the deviation amount (ΔLE) of the left end position (LE) of the detected front vehicle (CAR) from said center (C) and the left offset amount (ΔLoff) is larger than the distance (ΔLB) of the left base position (LB) from the center (C) (ΔLE-ΔLoff>ΔLB); and
forming, by the left headlamp (LHL), a left high light distribution (LM) in which no cut-off line is formed in the left area of the optical axis of the left headlamp and the cut-off line is formed in the right area of the optical axis of the left headlamp, when the difference (ΔLE-ΔLoff) between the deviation amount (ΔLE) of the left end position (LE) of the detected front vehicle (CAR) from said center (C) and the left offset amount (ΔLoff is smaller than the distance (ΔLB) of the left base position (RB) from the center (C) (ΔLE-ΔLoff<ΔLB).

## Patentansprüche

1. Lichtverteilungs-Steuervorrichtung eines Fahrzeug-Scheinwerfers, umfassend:
ein zum Erfassen einer Fahrzeugposition eines einem eigenen Fahrzeug vorausfahrenden Fahrzeugs (CAR) und zum Wechseln der Lichtverteilung des Fahrzeugscheinwerfers auf der Basis der erfassten Fahrzeugpositionen und Basispositionen (LB, RB) ausgebildetes Adaptive-Driving-Beam-(ADB-)Steuermodul (104); wobei die Basispositionen (LB, RB) in einem Lichtverteilungs-Steuerkennfeld (M) entsprechend einem Bild (P) eines Frontbereichs des eigenen Fahrzeugs definiert sind, wobei die Mitte (C) des Lichtverteilungs-Steuerkennfelds (M) mit einer geraden Richtung des eigenen Fahrzeugs übereinstimmt und wobei eine rechte Basisposition (RB) in einem vorgegebenen Abstand (ΔRB) zur Mitte (C) in einer rechten Richtung festgelegt ist und sich eine linke Basisposition (LB) in einem vorgegebenen Abstand (ΔRL) zur Mitte (C) in einer linken Richtung befindet;
zur Schwenksteuerung einer Bestrahlungsrichtung des Fahrzeug-Scheinwerfers entsprechend einer Änderung einer Fahrrichtung des eigenen Fahrzeugs ausgebildetes Adaptive-Front-lighting-System-(AFS)-Steuermodul (101);
**gekennzeichnet durch**
ein zum Versetzen der im ADB-Steuermodul (104) verwendeten erfassten Fahrzeugposition als eine versetzte erfasste Fahrzeugposition (LEo, REo) im Lichtverteilungs-Steuerkennfeld (M) entsprechend einem vom AFS-Steuermodul (101) berechneten Schwenkwinkel ausgebildetes Versatzmodul (103), wobei, wenn das eigene Fahrzeug auf einer Straße mit Linkskurve fährt,
das AFS-Steuermodul (101) eine Schwenksteuerung des linken Scheinwerfers (LHL) des eigenen Fahrzeugs in einer linken Richtung durchführt,
das Versatzmodul (103) eine linke Endposition (LE) der erfassten Fahrzeugposition in einer rechten Richtung als eine linke Endposition (LEo) der versetzten erfassten Fahrzeugposition entsprechend dem berechneten Schwenkwinkel versetzt, und
das ADB-Steuermodul die Lichtverteilung des linken Scheinwerfers (LHL) auf der Basis eines Ergebnisses eines Vergleichs zwischen der linken Endposition (LEo) der versetzten erfassten Fahrzeugposition und einer linken Basisposition (LB) der Basisposition wechselt,
wobei, wenn das eigene Fahrzeug auf einer Straße mit Rechtskurve fährt,
das AFS-Steuermodul (101) eine Schwenksteuerung des rechten Scheinwerfers (RHL) des eigenen Fahrzeugs in einer rechten Richtung durchführt,
das Versatzmodul (103) eine rechte Endposition (RE) der erfassten Fahrzeugposition in einer linken Richtung als eine rechte Endposition (REo) der versetzten erfassten Fahrzeugposition entsprechend dem berechneten Schwenkwinkel versetzt, und
das ADB-Steuermodul die Lichtverteilung des rechten Scheinwerfers (RHL) auf der Basis eines Ergebnisses eines Vergleichs zwischen der rechten Endposition (REo) der versetzten erfassten Fahrzeugposition und einer rechten Basisposition (RB) der Basisposition wechselt.

2. Lichtverteilungs-Steuerverfahren eines Fahrzeug-Scheinwerfers, wobei das Verfahren umfasst:
Berechnen eines Adaptive-Front-lighting-System-(AFS-)Schwenkwinkels zum Beleuchten einer Fahrzielrichtung eines eigenen Fahrzeugs nach einer vorgegebenen Zeit ab einem aktuellen Zeitpunkt;
Schwenken einer optischen Achse eines rechten Scheinwerfers (RHL) und einer optischen Achse eines linken Scheinwerfers (LHL) entsprechend dem berechneten AFS-Schwenkwinkel;
Erfassen einer Fahrzeugposition eines dem eigenen Fahrzeug vorausfahrenden Fahrzeugs (CAR) durch eine Kamera (CAM);
Festlegen einer Mitte (C), die mit einer geraden Richtung des eigenen Fahrzeugs übereinstimmt, einer rechten Basisposition (RB) in einem vorgegebenen Abstand (ΔRB) zur Mitte (C) in einer rechten Richtung und einer linken Basisposition (LB) in einem vorgegebenen Abstand (ΔLB) zur Mitte in einer linken Richtung in einem Lichtverteilungs-Steuerkennfeld (M) entsprechend einem Bild (P) eines von der Kamera (CAM) fotografierten Frontbereichs des eigenen Fahrzeugs;
Bestimmen einer Abweichungsmenge (ΔRE) einer rechten Endposition (RE) des erfassten vorausfahrenden Fahrzeugs (CAR) zur Mitte (C) und einer Abweichungsmenge (ΔLE) einer linken Endposition (LE) des erfassten vorausfahrenden Fahrzeugs (CAR) zur Mitte (C) im Lichtverteilungs-Steuerkennfeld (M);
**gekennzeichnet durch**
Bestimmen einer rechten Versatzmenge (ΔRoff) entsprechend dem AFS-Schwenkwinkel des rechten Scheinwerfers (RHL) und einer linken Versatzmenge (ΔLoff) entsprechend dem AFS-Schwenkwinkel des linken Scheinwerfers (LHL);
Bilden einer Abblendlichtverteilung (RL) durch den rechten Scheinwerfer (RHL), in der Hell-Dunkel-Grenzen sowohl im rechten Bereich als auch im linken Bereich der optischen Achse des rechten Scheinwerfers (RHL) gebildet werden, wenn ein Unterschied (ΔRE-ΔRoff) zwischen der Abweichungsmenge (ΔRE) der rechten Endposition (RE) des erfassten vorausfahrenden Fahrzeugs (CAR) zur Mitte (C) und der rechten Versatzmenge (ΔRoff) größer ist als der Abstand (ΔRB) der rechten Basisposition (RB) zur Mitte (C) (ΔRE-ΔRoff>ΔRB);
Bilden einer rechten Fernlichtverteilung (RM) durch den rechten Scheinwerfer (RL), in der keine Hell-Dunkel-Grenze im rechten Bereich der optischen Achse des rechten Scheinwerfers gebildet wird und die Hell-Dunkel-Grenze im linken Bereich der optischen Achse des rechten Scheinwerfers gebildet wird, wenn der Unterschied (ΔRE-ΔRoff) zwischen der Abweichungsmenge (ΔRE) der rechten Endposition (RE) des erfassten vorausfahrenden Fahrzeugs (CAR) zur Mitte (C) und der rechten Versatzmenge (ΔRoff) kleiner ist als der Abstand (ΔRB) der rechten Basisposition (RB) zur Mitte (C) (ΔRE-ΔRoff<ΔRB);
Bilden einer Abblendlichtverteilung (LL) durch den linken Scheinwerfer (LHL), in der Hell-Dunkel-Grenzen sowohl im rechten Bereich als auch im linken Bereich der optischen Achse des linken Scheinwerfers (LHL) gebildet werden, wenn ein Unterschied (ΔLE-ΔLoff) zwischen der Abweichungsmenge (ΔLE) der linken Endposition (LE) des erfassten vorausfahrenden Fahrzeugs (CAR) zur Mitte (C) und der linken Abweichungsmenge (ΔLoff) größer ist als der Abstand (ΔLB) der linken Basisposition (LB) zur Mitte (C) (ΔLE-ΔLoff>ΔLB); und
Bilden einer linken Fernlichtverteilung (LM) durch den linken Scheinwerfer (LL), in der keine Hell-Dunkel-Grenze im linken Bereich der optischen Achse des linken Scheinwerfers gebildet wird und die Hell-Dunkel-Grenze im rechten Bereich der optischen Achse des linken Scheinwerfers gebildet wird, wenn der Unterschied (ΔLE-ΔLoff) zwischen der Abweichungsmenge (ΔLE) der linken Endposition (LE) des erfassten vorausfahrenden Fahrzeugs (CAR) zur Mitte (C) und der linken Versatzmenge (ΔLoff) kleiner ist als der Abstand (ΔLB) der linken Basisposition (LB) zur Mitte (C) (ΔLE-ΔLoff<ΔLB);

## Revendications

1. Appareil de contrôle de distribution de lumière d'un phare de véhicule, comprenant :
un module de contrôle (104) de feu de route adaptatif (ADB) configuré pour détecter une position de véhicule d'un premier véhicule (CAR) en face de son propre véhicule et pour commuter la distribution de lumière du phare de véhicule sur la base de la position de véhicule détectée et des positions de base (LB, RB), dans lequel les positions de base (LB, RB) sont définies dans une carte de contrôle de distribution de lumière (M) correspondant à une image (P) d'une zone avant de son propre véhicule, dans lequel le centre (C) de la carte de contrôle de distribution de lumière (M) correspond à une direction droite de son propre véhicule et dans lequel une position de base droite (RB) est déterminée à une distance prédéterminée (ΔRB) du centre (C) dans une direction droite et une position de base gauche (LB) est à une distance prédéterminée (ΔRL) du centre (C) dans une direction gauche ;
un module de contrôle (101) de système d'éclairage avant adaptatif (AFS) configuré pour contrôler par pivotement une direction de rayonnement du phare de véhicule en fonction d'un changement d'une direction de déplacement de son propre véhicule ;
**caractérisé par** :
un module de décalage (103) configuré pour décaler, dans la carte de contrôle de distribution de lumière (M), la position de véhicule détectée adoptée dans le module de contrôle de ADB (104) en tant que position de véhicule détectée décalée (LEₒ, REₒ), en fonction d'un angle de pivotement calculé, calculé par le module de contrôle de AFS (101), dans lequel, lorsque son propre véhicule se déplace sur une route comportant un virage à gauche,
le module de contrôle de AFS (101) contrôle par pivotement le phare gauche (LHL) de son propre véhicule dans une direction gauche,
le module de décalage (103) décale une position d'extrémité gauche (LE) de la position de véhicule détectée dans une direction droite en tant que position d'extrémité gauche (LEₒ) de la position de véhicule détectée décalée, en fonction de l'angle de pivotement calculé, et
le module de contrôle de ADB commute la distribution de lumière du phare gauche (LHL) sur la base d'un résultat de comparaison entre la position d'extrémité gauche (LEₒ) de la position de véhicule détectée décalée et une position de base gauche (LB) de la position de base,
dans lequel, lorsque son propre véhicule se déplace sur une route comportant un virage à droite,
le module de contrôle de AFS (101) contrôle par pivotement le phare droit (RHL) de son propre véhicule dans une direction droite,
le module de décalage (103) décale une position d'extrémité droite (RE) de la position de véhicule détectée dans une direction gauche en tant que position d'extrémité droite (REₒ) de la position de véhicule détectée décalée, en fonction de l'angle de pivotement calculé, et
le module de contrôle de ADB commute la distribution de lumière du phare droit (RHL) sur la base d'un résultat de comparaison entre la position d'extrémité droite (REₒ) de la position de véhicule détectée décalée et une position de base droite (RB) de la position de base.

2. Procédé de contrôle de distribution de lumière d'un phare de véhicule, le procédé comprenant les étapes suivantes :
calculer un angle de pivotement de système d'éclairage avant adaptatif (AFS) pour éclairer une direction de destination de déplacement de son propre véhicule après un temps prédéterminé à partir d'un moment courant ;
faire pivoter un axe optique d'un phare droit (RHL) et un axe optique d'un phare gauche (LHL) selon l'angle de pivotement de AFS calculé ;
détecter une position de véhicule d'un véhicule avant (CAR) en face de son propre véhicule grâce à un appareil photo (CAM) ;
régler un centre (C) qui correspond à une direction droite de son propre véhicule, une position de base droite (RB) à une distance prédéterminée (ΔRB) du centre (C) dans une direction droite, et une position de base gauche (LB) à une distance prédéterminée (ΔLB) du centre (C) dans une direction gauche, dans une carte de contrôle de distribution de lumière (M) correspondant à une image (P) d'une zone avant de son propre véhicule photographiée par l'appareil photo (CAM) ;
déterminer une quantité de déviation (ΔRE) d'une position d'extrémité droite (RE) du véhicule avant détecté (CAR) dudit centre (C) et une quantité de déviation (ΔLE) d'une position d'extrémité gauche (LE) du véhicule avant détecté (CAR) dudit centre (C), dans la carte de contrôle de distribution de lumière (M) ;
**caractérisé par** les étapes suivantes :
déterminer une quantité de décalage droit (ΔRoff) selon l'ange de pivotement de AFS du phare droit (RHL) et une quantité de décalage gauche (ΔLoff) selon l'angle de pivotement de AFS du phare gauche (LHL) ;
former, par le phare droit (RHL), une distribution de lumière de feu de croisement (RL) dans laquelle des lignes de découpe sont formées à la fois dans la zone droite et la zone gauche de l'axe optique du phare droit (RHL), lorsqu'une différence (ΔRE - ΔRoff) entre la quantité de déviation (ΔRE) de la position d'extrémité droite (RE) du véhicule avant détecté (CAR) dudit centre (C) et la quantité de décalage droit (ΔRoff) est supérieure à la distance (ΔRB) de la position de base droite (RB) du centre (C) (ΔRE - ΔRoff > ΔRB) ;
former, par le phare droit (RHL), une distribution de lumière élevée droite (RM) dans laquelle aucune ligne de découpe n'est formée dans la zone droite de l'axe optique du phare droit et la ligne de découpe est formée dans la zone gauche de l'axe optique du phare droit, lorsque la différence (ΔRE - ΔRoff) entre la quantité de déviation (ΔRE) de la position d'extrémité droite (RE) du véhicule avant détecté (CAR) dudit centre (C) et la quantité de décalage droit (ΔRoff) est inférieure à la distance (ΔRB) de la position de base droite (RB) du centre (C) (ΔRE - ΔRoff < ΔRB) ;
former, par le phare gauche (LHL), une distribution de lumière de feu de croisement (LL) dans laquelle des lignes de découpe sont formées à la fois dans la zone droite et la zone gauche de l'axe optique du phare gauche (LHL), lorsqu'une différence (ΔLE - ΔLoff) entre la quantité de déviation (ΔLE) de la position d'extrémité gauche (LE) du véhicule avant détecté (CAR) dudit centre (C) et la quantité de décalage gauche (ΔLoff) est supérieure à la distance (ΔLB) de la position de base gauche (LB) du centre (C) (ΔLE - ΔLoff > ΔLB) ; et
former, par le phare gauche (LHL), une distribution de lumière élevée gauche (LM) dans laquelle aucune ligne de découpe n'est formée dans la zone gauche de l'axe optique du phare gauche et la ligne de découpe est formée dans la zone droite de l'axe optique du phare gauche, lorsque la différence (ΔLE - ΔLoff) entre la quantité de déviation (ΔLE) de la position d'extrémité gauche (LE) du véhicule avant détecté (CAR) dudit centre (C) et la quantité de décalage gauche (ΔLoff) est inférieure à la distance (ΔLB) de la position de base gauche (RB) du centre (C) (ΔLE - ΔLoff < ΔLB).
